**Europäisches Patentamt**

**European Patent Office**

**Office européen des brevets**

(19)

(11) Veröffentlichungsnummer : **0 363 565 B1**

(12)

# EUROPÄISCHE PATENTSCHRIFT

(45) Veröffentlichungstag der Patentschrift :
**23.09.92 Patentblatt 92/39**

(51) Int. Cl.$^5$ : **F01C 21/04**

(21) Anmeldenummer : **89110849.0**

(22) Anmeldetag : **15.06.89**

---

(54) **Rotationskolbenbrennkraftmaschine.**

---

(30) Priorität : **11.10.88 DE 8812757 U**

(43) Veröffentlichungstag der Anmeldung :
**18.04.90 Patentblatt 90/16**

(45) Bekanntmachung des Hinweises auf die
Patenterteilung :
**23.09.92 Patentblatt 92/39**

(84) Benannte Vertragsstaaten :
**DE FR GB IT**

(56) Entgegenhaltungen :
**EP-A- 0 292 933**
**DE-A- 1 576 207**

(56) Entgegenhaltungen :
**FR-A- 996 293**
**US-A- 4 345 885**
**PATENT ABSTRACTS OF JAPAN vol. 10, no.**
**249 (M-511)(2305) 27 August 1986, & JP-A-61**
**79098**

(73) Patentinhaber : **Wankel GmbH**
**Attilastrasse 56**
**W-1000 Berlin 42 (DE)**

(72) Erfinder : **Speiser, Josef**
**Sonnhaldenstrasse 25b**
**W-8992 Wasserburg (DE)**

(74) Vertreter : **Freiherr von Welser, Hubert**
**Stielerstrasse 7/I**
**W-8000 München 2 (DE)**

---

## Beschreibung

Die Erfindung betrifft eine Rotationskolbenbrennkraftmaschine der Trochoidenbauart, deren Gehäuse aus Seitenteilen und wenigstens einem Mantelteil mit jeweils zweibogiger Mantellaufbahn besteht, das von einer Exzenterwelle mit mindestens einem Exzenter je Mantellaufbahn durchsetzt ist, auf dem bzw. auf denen auf einem Rollenlager ein dreieckiger Kolben in gleitendem Eingriff mit seinen Ecken an der zugehörigen Mantellaufbahn von einem zwischen der Seitenwand eines Seitenteils und dem Exzenter angeordneten Synchrongetriebe gesteuert umläuft.

Der Kolben einer solchen für höhere Belastungen bestimmten Maschine wird üblicherweise mit Öl gekühlt, das über axiale und radiale Bohrungen in der Exzenterwelle und dem Exzenter in den Lagerund Getrieberaum eintritt und in den Ölsumpf abläuft. Dabei mußte das Öl von den Arbeitsräumen der Maschine durch in den Seitenwänden des Kolbens liegende Ölinnendichtungen ferngehalten werden. Wegen ihres Raumbedarfes ergaben sich konstruktive Schwierigkeiten, solche Dichtungen unterzubringen und zudem ist es kaum möglich, mit ihnen den Übertritt des Öls in die Arbeitsräume vollständig auszuschließen und eine dadurch verursachte Verschlechterung der Abgaswerte der Maschine zu verhindern.

Mit DE-OS- 35 45 818 ist eine Maschine der eingangs genannten Art beschrieben, die zwischen Kolben und Exzenter Rollenlager aufweist, deren Schmierung auf eine Mindestmenge von Öl beschränkt werden kann, dessen Überschüsse nur mehr für Schmierung des Synchronisierungsgetriebes und der Dichtelemente des Kolbens ausreichen müssen. Auf besondere Ölinnendichtungen in den Kolbenseitenwänden kann daher verzichtet werden.

Mit der vorgenannten Veröffentlichung wurde vorgeschlagen, dem Exzenterlager das Öl von außen von der Seite des Synchrongetriebes zuzuführen. Bei bestimmten Konstruktionen ist dies jedoch nicht möglich und es muß daher das Öl von der anderen, dem Getriebe abgewendeten Seite des Exzenters zugeführt werden.

Aufgabe der Erfindung war demnach eine einfach herzustellende Anordnung der Ölzuführung auf der dem Getriebe abgewandten Seite der Exzenter außerhalb der hohlen Innenräume der Welle und des oder der Exzenter, insbesondere bei Anordnung einer Hohlwelle im Wandmaterial der Welle bzw. des oder der Exzenter in einer nur für Lager, Getriebe und Dichtelemente des Kolbens notwendigen Minimaldosierung.

Die Lösung dieser Aufgabe ergibt sich aus den Ansprüchen.

Ein besonderer Vorteil der erfindungsgemäßen Anordnung ist es, daß bei Maschinen mit zwei Mantellaufbahnen und Kolben die beiderseitigen Exzenterlager mit einer einzigen Ölzuführung über das Mittelteil des Gehäuses mit Öl versorgt werden können. Zwei Ausführungsbeispiele der Erfindung werden im folgenden anhand der Zeichnungen beschrieben.

Es zeigen

Fig. 1 einen Axialschnitt durch eine erfindungsgemäße Brennkraftmaschine mit einem Mantelteil und einem Kolben,

Fig. 2 einen Axialschnitt durch eine erfindungsgemäße Brennkraftmaschine mit zwei Mantelteilen und zwei Kolben.

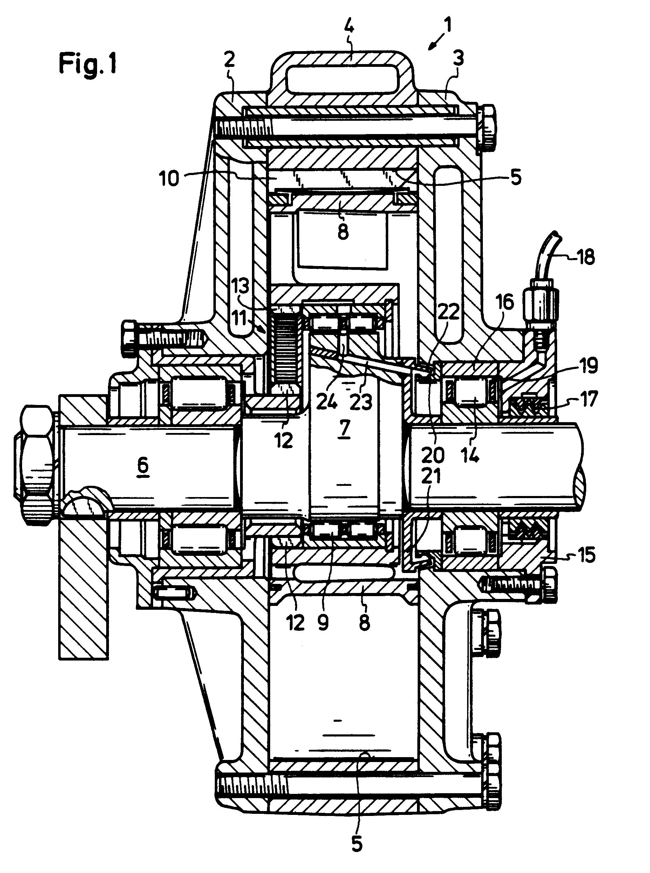

Zu Figur 1:

Das Gehäuse 1 der in Figur 1 dargestellten Brennkraftmaschine ist aus einem linken Seitenteil 2 und einem rechten Seitenteil 3 und einem zwischen diesem verschraubten Mantelteil 4 mit einer zweibogigen trochoidenförmigen Mantellaufbahn 5 gebildet. Das Gehäuse 1 wird axial von der Exzenterwelle 6 durchsetzt, auf deren Exzenter 7 eine dreieckiger Kolben 8 auf einem Rollenlager 9 umläuft. Der Kolben gleitet in einer Planetenbewegung mit in seinen Ecken vorgesehenen Dichtleisten 10 in ständiger Anlage an der Mantellaufbahn 5. Zwischen dem linken Seitenteil 2 und dem Kolben 8 ist das Synchronosierungsgetriebe 11 angeordnet, das aus einem im Seitenteil 2 feststehenden um die Exzenterwelle 6 liegenden Ritzel 12 und einem am Kolben 8 fest angeordneten Hohlrad 13 besteht.

Das in der Zeichnung rechte Lager 14 der Exzenterwelle 6, ein Rollenlager, ist auf seiner axialen Außenseite durch einen ringförmigen Deckel 15 abgeschlossen, der an der Außenschale 16 des Lagers 14 anliegt. Der Deckel 15 ist gegenüber der Exzenterwelle 6 mit der Labyrinthdichtung 17 abgedichtet. In dem Seitenteil 3 ist eine Ölzuführungsleitung 18 vorgesehen, die in dem Raum 19 zwischen den Rollen des Lagers 14 und dem Deckel 15 mündet.

Auf der in der Zeichnung linken Seite der Außenschale 16 des Lagers 14 ist um die Exzenterwelle 6 eine ringförmige Ölführungstülle 20 vorgesehen, in die aus dem Lager 14 Öl austritt. Im Exzenter 7 mit diesem fest verbunden ist eine um die Exzenterwelle 6 umlaufende, kreisförmige Ölfangrinne 21 vorgesehen, die bei 22 die Ölführungstülle 20 mit geringem Abstand umgreifend nach innen zur Exzenterwelle 6 zu eingebogen ist. Von dieser Ölfangrinne 21 führt im Exzentrizitätsmaximum des Exzenters 7 eine schräge Bohrung 23 zu einer radialen Bohrung 24, die im Rollenlager 9 des Exzenters 7 endet.

Das aus der Ölzuführungsleitung 18 in das Lager 14 zurückfließende unverbrauchte Öl kann nur in die Ölführungstülle 20 austreten. Das an deren Rand abtropfende Öl fällt in die Ölfangrinne 21 und wird durch Fliehkraftwirkung in deren radial äußerstem Rand gesammelt und über die Bohrungen 23 und 24 in das Rollenlager 9 des Exzenters 7 gedrückt. Das aus diesem Rollenlager 9 in geringer Menge seitlich austretende Öl dient zur Schmierung des Synchronisierungsgetriebes 11 und der Dichtteile 10 und der nicht dargestellten Axialdichtungen des Kolbens 8. Durch entsprechende Dosierung des Öls gelangt nur eine so große Menge Öl in das Rollenlager 9, daß zwar Synchronisierungsgetriebe 11 und die Dichtteile des Kolbens noch geschmiert werden, daß aber die Arbeitsräume der Maschine vom Öl nicht mehr oder nur mehr in vernachlässigbaren Mengen erreicht werden und deshalb auf Ölinnendichtungen verzichtet werden kann.

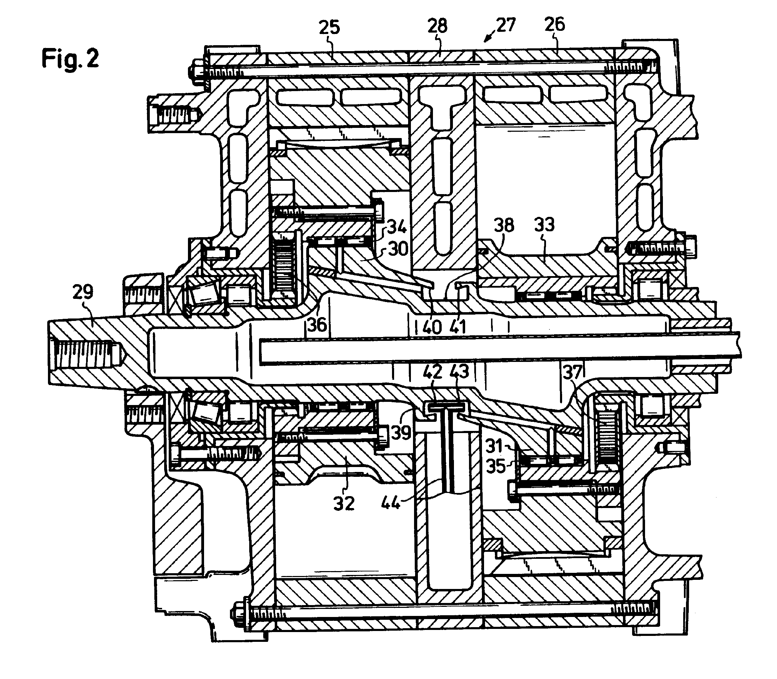

Zu Figur 2:

Die in Figur 2 dargestellte Brennkraftmaschine ist eine Verdoppelung der in Figur 1 dargestellten mit zwei dem Mantelteil 4 in Figur 1 gleichen Mantelteilen 25, 26 des Gehäuses 27, zwischen denen ein Mittelteil 28 angeordnet ist, das in seiner die Arbeitsräume der Maschine bildenden Funktion den Seitenteilen 2 und 3 entspricht. Die das Gehäuse 27 durchsetzende Exzenterwelle 29 weist zwei Exzenter 30, 31 auf, auf denen innerhalb der Mantelteile 25, 26 mit dem Kolben 8 in Figur 1 gleiche Kolben 32 und 33 umlaufen. In den Exzentern sind demgemäß die Bohrungen 23 und 24 vorgesehen, über die Öl in die Rollenlager 34, 35 der Exzenter 30,31 gefördert wird. An den axialen Außenseiten der Exzenter 30, 31 sind Synchronisierungsgetriebe 36 und 37 angeordnet, die ebenfalls wie die Dichtelemente der Kolben 32, 33 über die Rollenlager 34 und 35 mit der benötigten Mindestmenge Öl versorgt werden.

Die der Ölfangrinne 21 in Figur 1 entsprechende Ölfangrinne 38 ist für beide Kolben 32, 33 gemeinsam in der Mitte des gekröpften Zwischenstückes 39 der Exzenterwelle 29 in Form einer Ausdrehung vorgesehen. Diese Ölfangrinne 38 weist unterschnittene, umlaufende Rinnen bildende Ränder 40, 41 auf, die in axialer Richtung seitwärts gewendete T-förmig ausgebildete Abzweigungen 42, 43 eines Ölzuführungsröhrchens 44 übergreifen. Dieses Ölzuführungsröhrchen 44 liegt in dem Mittelteil 28 und wird über eine dosierende hier nicht dargestellte Ölzuführung gespeist. Sie entsprechen der Ölführungstülle 20 der in Figur 1 dargestellten Maschine. Unter die unterschneidenden Ränder 40, 41 der Ölfangrinne 38 münden die schrägen Bohrungen 23 und in sie wird das unter den Rändern 40, 41 sich sammelnde Öl durch Fliehkraftwirkung gedrückt. Statt des einen T-förmig auslaufenden Ölzuführungsröhrchen 44 können zwei in axialer Ebene L-förmig gebogene vorgesehen sein.

Es ist für eine gleichmäßige Versorgung der Rollenlager 9, 34, 35 notwendig, daß die radiale Bohrung 24 in der Mitte dieser Exzenterlager mündet. Zweckmäßig ist es, daß die Rollen dieser Lager in der Mitte geteilt sind, so daß die Mündung der radialen Bohrung 24 nicht von den Rollen überfahren wird. Damit wird vermieden, daß Ölkohle oder Abrieb in diese Mündung gerollt und diese damit verstopft wird, was zur Zerstörung der Maschine führen könnte.

**Bezugszeichenverzeichnis**

Zu Figur 1:

1 Gehäuse
2 linkes Seitenteil
3 rechtes Seitenteil
4 Mantelteil
5 Mantellaufbahn
6 Exzenterwelle
7 Exzenter
8 Kolben
9 Rollenlager
10 Dichtleisten
11 Synchronisierungsgetriebe
12 Ritzel
13 Hohlrad
14 rechtes Lager der Exzenterwelle 6
15 Deckel
16 Außenschale von 14

17 Labyrinthdichtung
18 Ölzuführungsleitung
19 Raum in 14
20 Ölführungstülle
21 Ölführungsrinne
22 Umgreifung von 20 durch 21
23 schräge Bohrung
24 radiale Bohrung

Zu Figur 2:

25, 26 Mantelteile
27 Gehäuse
28 Mittelteil
29 Exzenterwelle
30, 31 Exzenter
32, 33 Kolben
34, 35 Rollenlager
36, 37 Synchronisierungsgetriebe
38 Ölfangrinne
39 gekröpftes Zwischenstück von 29
40, 41 Ränder der Ölfangrinne
42, 43 T-förmige Abzweigungen
44 Ölzuführungsröhrchen

**Patentansprüche**

1. Rotationskolbenbrennkraftmaschine der Trochoidenbauart, deren Gehäuse (1,27) aus Seitenteilen (2,3) und wenigstens einem Mantelteil (4,25,26) mit jeweils zweibogiger Mantellaufbahn (5) besteht, das von einer Exzenterwelle (6,29) mit wenigstens einem Exzenter (7,30,31) je Mantellaufbahn (5) durchsetzt ist, auf dem bzw. auf denen auf einem Rollenlager (9,34,35) ein dreieckiger Kolben (8,32,33) in gleitendem Eingriff mit seinen Ecken an der zugeordneten Mantellaufbahn (5) von einem zwischen der Seitenwand eines Seitenteils (2,3) und dem Exzenter (7,30,31) angeordneten Synchronisierungsgetriebe (11,36,37) gesteuert umläuft, dadurch gekennzeichnet, daß von einer an der vom Synchronisierungsgetriebe (11,36,37) abliegenden Seite des bzw. der Exzenter (7,30,31) eine um die Exzenterwelle (6,29) konzentrisch angeordneten Ölfangrinne (21,38) im Exzentrizitätsmaximum des bzw. der Exzenter (7,30,31) eine Bohrung (23) schräg radial auswärts geführt ist, die in eine in der Mitte des Rollenlagers (9,34,35) des bzw. der Exzenter (7,30,31) endende radiale Bohrung (24) mündet, und daß am Gehäuse (1,27) der Brennkraftmaschine feststehende Vorrichtungen (20,42,43,44) zur Förderung von dosiertem Schmieröl in die Ölfangrinne (21,38) vorgesehen sind.

2. Rotationskolbenbrennkraftmaschine nach Anspruch 1, dadurch gekennzeichnet, daß die Ölfangrinne (21) ein an der vom Synchronisierungsgetriebe (11) abliegenden Seite des Exzenters (7) befestigtes zur Exzenterwelle (6) konzentrisches Teil ist, daß um eine an der Außenschale (16) des in dem Seitenteil (3) vorgesehenen, vom Synchronisierungsgetriebe (11) abliegenden von einem Deckel (15) an seiner axialen Außenseite abgeschlossenen Lager (14) der Exzenterwelle (6) angeordnete feststehende zur Exzenterwelle (6) konzentrische Ölführungstülle (20) liegt, und daß eine Ölzuführungsleitung (18) aus dem Seitenteil (3) in das Lager (14) geführt ist.

3. Rotationskolbenbrennkraftmaschine nach Anspruch 1, dadurch gekennzeichnet, daß bei Anordnung von zwei Mantelteilen (25,26) und zwei Kolben (32,33) die Ölfangrinne (38) eine Ausdrehung in der Exzenterwelle (29) in deren Mitte zwischen den Exzentern (30,31) ist und seitlich unterschnittene Ränder (40,41) aufweist, aus denen im Exzentrizitätsmaximum der Exzenter (30,31) schräg radial nach außen Bohrungen (23) zu radialen Bohrungen (24) führen, die in der Mitte der Rollenlager (34,35) der Exzenter (30,31) münden und daß aus dem Mittelteil (28) des Gehäuses (27) der Brennkraftmaschine mindestens ein Ölzuführungsröhrchen (44) unter die Ränder (40,41) der Ölzuführungsrinne ragen.

4

**4.** Rotationskolbenbrennkraftmaschine nach Anspruch 1, 3,
dadurch gekennzeichnet, daß das Ölzuführungsröhrchen (44) in axialer Ebene liegende T-förmige Abzweigungen (42,43) endet, die unter die Ränder (40,41) der Ölfangrinne (38) greifen.

**5.** Rotationskolbenbrennkraftmaschine nach Anspruch 1, 3,
dadurch gekennzeichnet, daß zwei Ölzuführungsröhrchen (44) vorgesehen sind, deren in axialer Ebene liegende L-förmig abgebogenen Enden unter die Ränder (40,41) der Ölfangrinne (38) greifen.

**6.** Rotationskolbenbrennkraftmaschine nach Anspruch 1, 2, 3,
dadurch gekennzeichnet, daß die Rollen des Rollenlagers (9,34,35) des bzw. der Exzenter (7,30,31) geteilt sind und nicht die öffnung der radialen Bohrung (24) im Exzenter (7,30,31) überfahren.

## Claims

**1.** A rotary piston internal combustion engine of trochoidal type of construction of which a housing (1, 27) consists of side parts (2, 3) and at least one mantle part (4, 25, 26) with respectively dual-arc mantle runway inner surfacing (5), said housing (1, 27) having an eccentric shaft (6, 29) with at least one eccentric (7, 30, 31) per mantle runway inner surfacing (5) passing through the housing (1, 27), as well as including a triangular piston means (8, 32, 33) journalled upon roller bearings (9, 34, 35) and having corners thereof in sliding engagement along the pertaining mantle runway inner surfacing (5), and including a synchromesh transmission (11, 36, 37) that controls and regulates rotation of the piston means (8, 32, 33) and that is arranged between a side wall of one side part (2, 3) and the eccentric means (7, 30, 31), the improvement therewith comprising:
an oil-collector groove means (21, 38) arranged concentrically around the eccentric shaft (6, 29) on a side of the eccentric (7, 30, 31) remote from the synchromesh transmission means (11, 36, 37);
a bore means (32) provided at the location of the eccentricity maximum of the eccentric (7, 30, 31) extending at an incline radically outwardly;
a radial bore (24) means terminating in the middle of the roller bearing (9, 34, 35) of the eccentric (7, 30, 31) and into which the inclined bore (23) means opens; and
means (20, 42, 43, 44) provided stationary on the housing (1, 27) of the rotary piston internal combustion engine for conveying of dosed lubricating oil to the oil-collector trough (21, 38).

**2.** A rotary piston internal combustion engine according to claim 1, in which said oil-collector trough (21) is a part concentric (7) to the eccentric shaft (6) secured to a side to the eccentric (7) remote from the synchromesh transmission (11) means; an oil supply nozzle means (20) arranged stationary concentric to the eccentric shaft (6) as provided in an outer shell raceway (16) in a side part of the bearing (14) of the eccentric shaft (6) closed off at an axially outer side thereof by a cover(15) remote from the synchromesh transmission means (11); and an oil supply line (18) leading from the side part (3) into said bearing.

**3.** A rotary piston internal combustion engine according to claim 1, which includes an arrangement of two mantle parts (25, 26) as dual inner surfacing (5) within a housing (1, 27) and including two triangular pistons (32, 33) with the oil-collector trough (38) being a groove in the eccentric shaft (29) in a middle thereof between the eccentrics (30, 31) and having laterally undercut edges (40, 41) from which bore means (23) at the eccentricity maximum of the eccentric (30, 31) lead at an incline radially outward into bores (24) extending radially which open in the middle of the roller bearing means (34, 35) of the eccentric; and
at least one oil supply tube means (44) projecting below the edges (40, 41) of the oil supply trough and extending from the middle part (28) of said housing (27) of the internal combusting engine.

**4.** A rotary piston internal combustion engine according to claim 3, in which said oil supply tube means (44) terminates in T-shaped branches (42, 43) located in an axial plane, which branches (42, 43) extend below the edges (40, 41) of the oil-collector trough (38).

**5.** A rotary piston internal combustion engine according to claim 3, in which two oil supply tube means (44) are provided having bent-off L-shaped ends located in an axial plane and extending below the edges (40, 41) of the oil-collector trough (38).

**6.** A rotary piston internal combustion engine according to claim 3, in which rollers of the roller bearing (9, 34, 35) means of the eccentric (7, 30, 31) are divided and do not traverse to pass over the opening of the radial bores (24) in the eccentric (7, 30, 31).

## Revendications

1.  Moteur à combustion interne à piston rotatif du type trochoïdal, dont le carter (1, 27) est composé par des joues (2, 3) et au moins un élément d'enveloppe (4, 25, 26) à chemin de roulement latéral (5) respectivement à deux arcs, par lequel passe un arbre d'excentrique (6, 29) à au moins un excentrique (7, 30, 31) par chemin de roulement latéral (5) et sur lequel ou lesquels tourne un piston triangulaire (8, 32, 33) à engrènement glissant par ses arêtes au chemin de roulement latéral affecté (5) à commande par un synchromesh (11, 36, 37) disposé entre la paroi latérale d'une joue (2, 3) et l'excentrique (7, 30, 31), caractérisé en ce qu'un perçage (23) s'étend radialement en biais d'un conduit de retenue d'huile (21, 38) vers l'extérieur, lequel conduit est disposé concentriquement autour ledit arbre d'excentrique au maximum d'excentricité dudit ou desdits excentriques (7, 30, 31) à un côté distant dudit ou desdits excentriques (7, 30, 31) relativement audit synchromesh, ledit perçage débouchant dans un perçage radial qui se termine au centre dudit palier à rouleaux (9, 34, 35) dudit ou desdits excentriques (7, 30, 31), et en ce que des dispositifs fixes (20, 42, 43, 44) sont prévus au carter (1, 27) du moteur à combustion interne pour la distribution d'huile de graissage dosée dans ledit conduit de retenue d'huile (21, 38).

2.  Moteur à combustion interne à piston rotatif selon la revendication 1, caractérisé en ce que ledit conduit de retenue d'huile (21) est un élément concentrique relativement audit arbre d'excentrique, qui est fixé au côté de l'excentrique (7) distant dudit synchromesh (11) et qui entoure un orifice d'amenée d'huile (20) fixe et concentrique audit arbre d'excentrique (6), lequel orifice est disposé à la coquille extérieure (16) du palier (14) dudit arbre d'excentrique (6), lequel palier est disposé dans la joue (3) et distant dudit synchromesh (11) et renfermé de son côté axial extérieur par un chapeau (15).

3.  Moteur à combustion interne à piston rotatif selon la revendication 1, caractérisé en ce qu'au cas où deux éléments de l'enveloppe (25, 26) et deux pistons (32, 33) sont prévus, le conduit de retenue d'huile (38) est un alésage dans l'arbre d'excentrique (29) au son milieu entre lesdits excentriques (30, 31) et présente des bords (40, 41) latéralement écrénés, des perçages (23) s'en étendant radialement en biais, au maximum d'excentricité desdits excentriques (30, 31), vers l'extérieur et vers des perçages radiaux (24) qui débouchent dans le centre desdits paliers à rouleaux (34, 35) desdits excentriques (30, 31), et en ce qu'au moins une tubulure d'amenée d'huile (44) s'étend de la partie centrale (28) dudit carter en faisant saillie en dessous desdits bords (40, 41) dudit conduit de retenue d'huile.

4.  Moteur à combustion interne à piston rotatif selon les revendications 1 et 3, caractérisé en ce que ladite tubulure d'amenée d'huile (44) se termine par des dérivations en T (42, 43) qui se trouvent dans un plan axial et font saillie en dessous desdits bords (40, 41) dudit conduit de retenue d'huile (38).

5.  Moteur à combustion interne à piston rotatif selon les revendications 1 et 3, caractérisé en ce que deux tubulures d'amenée d'huile (44) sont prévus dont les extrémités pliées en L, qui se trouvent dans un plan axial, font saillie en dessous lesdits bords (40, 41) dudit conduit de retenue d'huile (38).

6.  Moteur à combustion interne à piston rotatif selon les revendications 1, 2 et 3, caractérisé en ce que les rouleaux dudit palier à rouleaux (9, 34, 35) dudit ou desdits excentriques (7, 30, 31) sont séparés et ne défilent pas devant l'ouverture dudit perçage radial dans l'excentrique (7, 30, 31).

Fig.1

Fig. 2

EP 0 363 565 B1